# DEMANDE DE BREVET EUROPEEN

(11) **EP 2 568 231 A1**
(43) Date de publication de la demande: **13.03.2013**
(21) Numéro de dépôt: 11180436.5
(22) Date de dépôt: 07.09.2011
(51) Int. Cl.: F24J 2/52

(54) **Dispositif de fixation d'un module solaire photovoltaïque sur un support**

(71) Demandeur: Photowatt International, 38300 Bourgoin Jallieu (FR)
(72) Inventeur: Coatanoan, Laetitia, 60800 Saint Priest (FR); Marnissi, Jihane, 69006 Lyon (FR)
(74) Mandataire: Maureau, Philippe

(57) **Abrégé**

Ce dispositif (1) comprend un rail (4), un organe (5) de maintien et un organe (6) de fixation. De plus:
(i) le rail (4) présente une zone de positionnement (4a), une zone d'appui (4b) du bord (2c) latéral du module solaire photovoltaïque (2), et des moyens de fixation complémentaires de l'organe (6) de fixation,
(ii) l'organe (5) de maintien comprend une portion (5a) à l'intérieur de la zone de positionnement (4a) et une portion (5b) en regard de la zone d'appui (4b), et
(iii) l'organe (6) de fixation comprend une zone de contact (6a) en appui contre l'organe (5) de maintien, de sorte que l'organe (6) de fixation coopère de façon complémentaire à l'organe (5) de maintien afin de serrer le bord (2c) entre la zone d'appui (4b) et la portion (5b).

## Description

La présente invention concerne un dispositif de fixation de panneaux photovoltaïques sur un support.

Les panneaux photovoltaïques peuvent être fixés sur un support comme une toiture industrielle ou traditionnelle. La fixation de ces panneaux peut être réalisée à l'aide d'un rail relié au support par des moyens de fixation. Un élément de fixation complémentaire du rail est fixé sur ce dernier. Le panneau photovoltaïque, coincé entre le rail et l'élément de fixation, est ainsi maintenu en position.

Cependant, l'opération consistant à solidariser l'élément de fixation sur le rail est délicate, car elle nécessite simultanément un positionnement précis de cet élément par rapport au rail et sa fixation sur le rail.

Aussi la présente invention a pour but de pallier tout ou partie de ces inconvénients en proposant un dispositif de fixation d'un panneau photovoltaïque (également appelé module photovoltaïque) permettant de fixer les panneaux photovoltaïques sur un support via un montage simple et sans beaucoup d'efforts.

A cet effet, la présente invention a pour objet un dispositif de fixation d'un module solaire photovoltaïque sur un support, caractérisé en ce qu'il comprend un rail destiné à être relié au support, un organe de maintien et un organe de fixation, et en ce que :
(i) le rail présente une zone de positionnement, une zone d'appui capable de supporter un bord latéral du module solaire photovoltaïque, et des moyens de fixation complémentaires de l'organe de fixation,
(ii) l'organe de maintien comprend une portion disposée à l'intérieur de la zone de positionnement et une portion disposée en regard de la zone d'appui, au-dessus du bord, et
(iii) l'organe de fixation comprend une zone de contact en appui contre l'organe de maintien, de sorte que l'organe de fixation coopère de façon complémentaire à l'organe de maintien afin de serrer le bord entre la zone d'appui et la portion de l'organe de maintien disposée en regard de la zone d'appui.

Ainsi, le dispositif selon l'invention permet de fixer des modules solaires photovoltaïques sur un support en deux étapes : une étape de positionnement dans laquelle l'organe de maintien est positionné sur le rail, puis une étape de fixation dans laquelle l'organe de fixation est fixé au rail, ce qui provoque le serrage du bord du module solaire photovoltaïque entre l'organe de maintien et le rail. La scission en deux étapes permet de simplifier le montage du dispositif et limite les efforts nécessaires à la fixation des modules solaires photovoltaïques.

Selon une caractéristique du dispositif selon l'invention, celui-ci comprend un deuxième organe de maintien similaire au précédent, présentant une portion positionnée à l'intérieur d'une deuxième zone de positionnement du rail et une portion disposée en regard d'une deuxième zone d'appui du rail, et l'organe de fixation comprend une deuxième zone de contact en appui contre le deuxième organe de maintien, de sorte que l'organe de fixation coopère aussi de façon complémentaire au deuxième organe de maintien afin de serrer un deuxième bord latéral d'un deuxième module solaire photovoltaïque entre la deuxième zone d'appui et la portion du deuxième organe de maintien disposée en regard de la deuxième zone d'appui.

Selon une variante, le premier et le deuxième organe de maintien sont réalisés en une seule et même pièce.

Selon une caractéristique du dispositif selon l'invention, chaque organe de maintien forme un levier.

Selon une forme d'exécution, chaque organe de maintien présente une zone d'appui servant de point d'appui du levier formé, et une portion en contact avec la zone de contact correspondante de l'organe de fixation, et la distance séparant chaque première zone d'appui et chaque portion en contact avec la zone de contact correspondante de l'organe de fixation correspond sensiblement à un bras de levier.

Ainsi, la fixation de l'organe de fixation sur le rail provoque le blocage de l'organe de maintien. La portion de l'organe de maintien en regard de la zone d'appui du rail est alors plaquée contre le bord qui se retrouve serré entre cette portion et la zone d'appui correspondante.

Selon une autre caractéristique du dispositif selon l'invention, chaque organe de maintien comprend en outre une deuxième zone d'appui, sur une surface distincte de celle comprenant la première d'appui.

De manière avantageuse, chaque portion en contact avec la zone de contact correspondante de l'organe de fixation est en saillie.

Cela permet de connaître précisément la surface de répartition des efforts exercés par l'organe de fixation sur chaque organe de maintien.

Selon une autre caractéristique du dispositif selon l'invention, celui-ci comprend au moins une butée destinée à supporter le bord inférieur d'un module solaire photovoltaïque.

Chaque butée permet de supporter le bord inférieur d'un module solaire photovoltaïque pour éviter qu'il ne glisse sur le rail si celui-ci est incliné, avant la pose du ou des organes de maintien.

Selon une caractéristique du dispositif selon l'invention, l'organe de fixation comprend une face externe, chaque zone de contact de l'organe de fixation présentant une surface de contact sensiblement plane formant avec un la face externe un angle α compris entre 45° et 65°.

Ces valeurs d'angle permettent une transmission des efforts exercés par l'organe de fixation sur chaque organe de maintien de sorte que la composante normale au plan du module solaire photovoltaïque de l'effort exercé par chaque organe de maintien sur le bord soit la plus élevée possible, pour un meilleur maintien.

Préférentiellement, l'organe de fixation est fixé sur le rail par clipsage.

Selon une forme de réalisation, l'organe de fixation comprend deux languettes capables de se déformer au contact des moyens de fixation complémentaires du rail, les moyens de fixation complémentaires comprenant au moins un retour, et l'extrémité des languettes comprend au moins un retour, chaque retour des languettes coopérant de manière complémentaire avec le ou l'un des retours des moyens de fixation complémentaires du rail, en vue de permettre l'insertion puis le maintien de l'organe de fixation sur le rail.

De préférence, l'organe de fixation présente une face externe et, sur sa face externe et dans le prolongement de chacune des languettes, l'organe de fixation comprend au moins un élément en saillie.

Cette caractéristique présente l'avantage de prévenir la déformation de l'organe de fixation lors de son montage. En effet, ce montage peut être effectué par percussion de la surface externe de l'organe de fixation, par exemple à l'aide d'un maillet.

Avantageusement, chaque élément en saillie est une nervure ou un plot.

De préférence, l'organe de fixation comprend une zone de moindre épaisseur permettant sa flexion en vue de sa mise en place sur le rail ou de son retrait du rail.

Selon une forme d'exécution, l'organe de fixation comprend une face interne et la zone de moindre épaisseur comprend un creux situé sur cette face interne.

Selon une autre caractéristique du dispositif selon l'invention, un premier élément d'étanchéité est interposé entre le bord d'un module solaire photovoltaïque et la portion de chaque organe de maintien disposée en regard de la zone d'appui correspondante du rail, et un deuxième élément d'étanchéité est interposé entre le bord du module solaire photovoltaïque et la zone d'appui correspondante du rail, de sorte que le bord du module solaire photovoltaïque est serré entre le premier élément d'étanchéité et le deuxième élément d'étanchéité.

Les éléments d'étanchéité améliorent l'étanchéité du dispositif. Ils préviennent l'insertion d'eau, de poussière, ou de saletés à l'intérieur du rail.

De préférence, le rail comprend au moins une goulotte s'étendant le long du rail, entre la zone d'appui et la zone de positionnement coopérant avec chaque organe de maintien.

Chaque goulotte permet l'évacuation des eaux pluviales, des poussières ou saletés qui pourraient s'accumuler en cas de détérioration du ou des éléments d'étanchéité.

Ces caractéristiques et d'autres de l'invention ressortiront clairement de la description qui suit d'un mode particulier de réalisation de l'invention, donné à titre d'exemple non limitatif, en faisant référence aux dessins annexés sur lesquels :
la figure 1 montre une vue en perspective d'une installation avec plusieurs modules solaires photovoltaïques et un dispositif de fixation selon un mode de réalisation de l'invention,
la figure 2 montre un exemple de module solaire photovoltaïque destiné à être fixé au dispositif de fixation selon un mode de réalisation de l'invention,
la figure 3 montre une vue partielle éclatée d'un dispositif de fixation selon un mode de réalisation de l'invention,
la figure 4 montre un rail d'un dispositif de fixation selon un mode de réalisation de l'invention,
la figure 5 montre un organe de maintien d'un dispositif de fixation selon un mode de réalisation de l'invention,
la figure 6 montre un organe de fixation d'un dispositif de fixation selon un mode de réalisation de l'invention,
la figure 7 est une vue en coupe selon la ligne I - I de la figure 1,
la figure 8 est une vue partielle en perspective d'un dispositif de fixation selon un mode de réalisation de l'invention, sensiblement à hauteur d'une jonction entre deux modules solaires photovoltaïques consécutifs, c'est-à-dire à la jonction entre un module solaire photovoltaïque et celui qui lui succède immédiatement dans le sens du rampant,
la figure 9 est une vue de face d'un dispositif de fixation selon un mode de réalisation de l'invention, sensiblement à hauteur d'une jonction entre deux modules solaires photovoltaïques consécutifs,
la figure 10 est une vue en coupe selon la ligne I - I de la figure 9,
la figure 11 est une vue en coupe selon la ligne II - II de la figure 9,
la figure 12 montre une vue en perspective d'une installation avec plusieurs modules solaires photovoltaïques et un dispositif de fixation selon un autre mode de réalisation de l'invention,
la figure 13 montre une vue partielle éclatée d'un dispositif de fixation selon cet autre mode de réalisation de l'invention,
la figure 14 montre un rail d'un dispositif de fixation selon cet autre mode de réalisation de l'invention,
la figure 15 montre un organe de maintien d'un dispositif de fixation selon un autre mode de réalisation de l'invention,
la figure 16 montre un organe de fixation d'un dispositif de fixation selon un autre mode de réalisation de l'invention,
la figure 17 est une vue en coupe selon la ligne I - I de la figure 12,
la figure 18 est une vue partielle en perspective d'un dispositif de fixation selon un autre mode de réalisation de l'invention, sensiblement à hauteur d'une jonction entre deux modules solaires photovoltaïques consécutifs, c'est-à-dire à la jonction entre un module solaire photovoltaïque et celui qui lui succède immédiatement dans le sens du rampant,
la figure 19 est une vue de face d'un dispositif de fixation selon un autre mode de réalisation de l'invention, sensiblement à hauteur d'une jonction entre deux modules solaires photovoltaïques consécutifs,
la figure 20 est une vue en coupe selon la ligne I - I de la figure 19,
la figure 21 est une vue en coupe selon la ligne II - II de la figure 19.

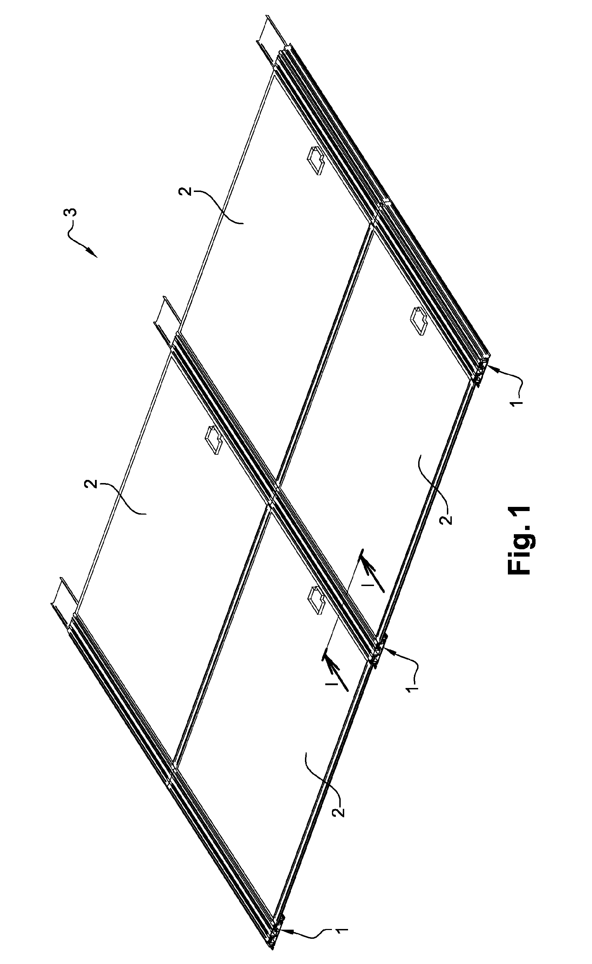

Un dispositif 1 de fixation, visible sur la figure 1, permet de fixer des modules solaires photovoltaïques 2 d'une installation 3 sur un support (non représenté). Le support peut être par exemple la charpente ou la soustoiture d'une toiture industrielle ou traditionnelle. Dans l'hypothèse où l'installation 3 est située sur un toit, le faîte du toit serait situé vers le haut de la figure 1, et l'avant-toit vers le bas de la figure 1. Ainsi, chaque dispositif 1 de fixation serait disposé dans le sens du rampant. Les modules solaires photovoltaïques 2 peuvent être mis en oeuvre en toiture complète (toute la toiture est couverte de modules) ou partielle (les modules sont présents uniquement sur une partie de la toiture).

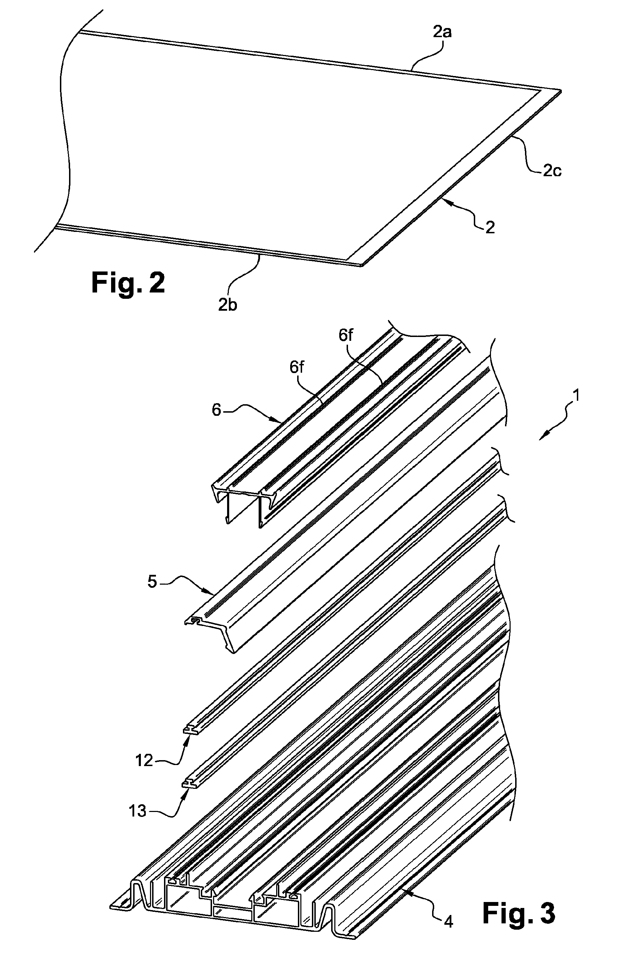

La figure 2 montre un exemple de module solaire photovoltaïque 2 destiné à être fixé grâce au dispositif 1 de fixation. Chaque module solaire photovoltaïque 2 présente un bord 2a supérieur, un bord 2b inférieur et deux bords 2c latéraux. La distance séparant le bord 2a supérieur et le bord 2b inférieur peut être définie comme la largeur du module solaire photovoltaïque 2.

Comme illustré à la figure 1, l'installation 3 comprend une pluralité de dispositifs 1 de fixation. Ces dispositifs 1 sont disposés de part et d'autre de chaque module solaire photovoltaïque 2. Ils s'étendent parallèlement les uns aux autres.

Selon le mode de réalisation illustré sur les figures 3 à 11, le dispositif 1 de fixation comprend un rail 4, deux organes 5 de maintien et un organe 6 de fixation.

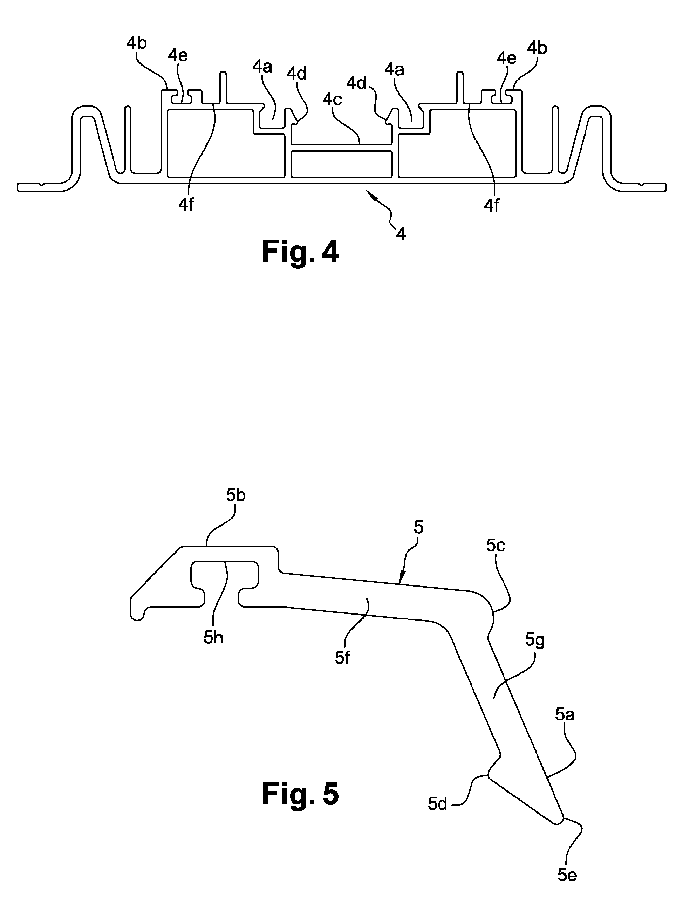

Selon le mode de réalisation représenté sur la figure 4, le rail 4 comprend deux zones de positionnement 4a de chaque organe 5 de maintien du bord 2c, et deux zones d'appui 4b. Chaque zone d'appui 4b est destinée à supporter l'un des bords 2c latéraux d'un module solaire photovoltaïque 2. Le rail 4 comprend également des moyens de positionnement complémentaires de l'organe 6 fixation; ces moyens de fixation complémentaires seront décrits plus en détails ci-après.

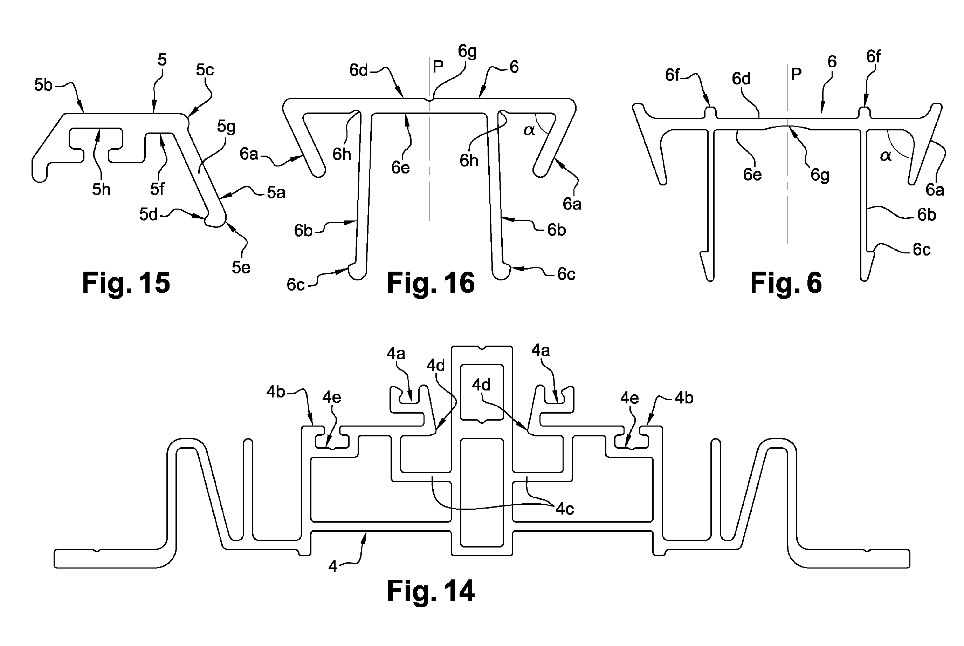

L'organe 6 de fixation, visible sur la figure 6, comprend deux zones de contact 6a. Ces zones de contact 6a sont destinées à venir chacune en appui contre les portions 5c de chaque organe 5 de maintien.

Chaque organe 5 de maintien, comme cela est visible sur la figure 5, présente une portion 5a destinée à être insérée dans une des zones de positionnement 4a du rail 4, une portion 5b destinée à être placée en regard de l'une des zones d'appui 4b du rail 4, et une portion 5c destinée à être au contact de l'une des zones de contact 6a de l'organe 6 de fixation.

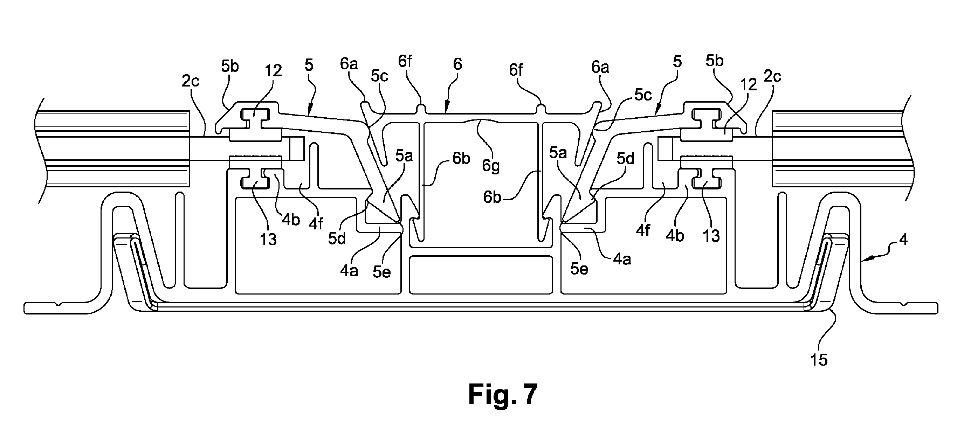

Le montage des organes 5 de maintien et de l'organe 6 de fixation sur le rail 4 permet de maintenir en position sur le rail 4 un des bords 2c latéraux d'un ou deux modules solaires photovoltaïques 2, comme cela est visible sur la figure 7 (deux bords 2c latéraux, appartenant chacun à module solaire photovoltaïque 2 distinct, sont ainsi maintenus en position).

Une fois la portion 5a de chaque organe 5 de maintien insérée dans la zone de positionnement 4a correspondante du rail 4, chaque organe 5 de maintien forme un levier. Chaque organe 5 de maintien comprend ainsi une première zone d'appui 5d au contact du rail 4. Chaque première zone d'appui 5d forme le point d'appui du levier formé par chaque organe 5 de maintien.

Lorsque l'organe 6 de fixation est fixé au rail 4, chacune des zones de contact 6a vient en appui contre la portion 5c de l'organe 5 de maintien correspondant. Des efforts s'appliquent alors sur chacune de ces portions 5c en contact avec l'organe 6 de fixation. Chaque organe 5 de maintien est bloqué sous l'effet de ces efforts, et leur portion 5b placée en regard de l'une des zones d'appui 4b du rail 4 appuie conséquemment sur le bord 2c latéral reposant sur cette zone d'appui 4b.

Afin de permettre à chacun des organes 5 de maintien de se bloquer dans la bonne position et non de se déplacer sous l'effet des efforts transmis par l'organe 6 de fixation, chaque organe 5 de maintien comprend une deuxième zone d'appui 5e contre le rail 4. Chaque deuxième zone d'appui 5e est située sur une surface distincte de celle sur laquelle est située chaque première zone d'appui 5d.

La présence simultanée de la première zone d'appui 5d et de la deuxième zone d'appui 5e ainsi situées permet également de faciliter le montage de chaque organe 5 de maintien puis de l'organe 6 de fixation. En effet, chaque organe 5 de maintien, une fois leur portion 5a disposée à l'intérieur de chacune des zones de positionnement 4a, est naturellement maintenu en position. Il suffit à un opérateur de fixer l'organe 6 de fixation pour achever le montage, les organes 5 de maintien ayant été préalablement positionnés.

Dans la forme de réalisation représentée sur les figures, la portion 5c de chaque organe 5 de maintien en contact avec l'une des zones de contact 6a de l'organe 6 de fixation est en saillie.

Chaque organe 5 de maintien peut présenter une première aile 5f et une deuxième aile 5g. La première aile 5f et la deuxième aile 5g sont sécantes. Comme cela est illustré aux différentes figures, la portion 5a est située à l'extrémité de la deuxième aile 5g, la portion 5b est située à l'extrémité de la première aile 5f, et la portion 5c (faisant saillie sur les figures) est sensiblement située au niveau de l'intersection de la première aile 5f et de la deuxième aile 5g. La première zone d'appui 5d est située sur la face interne de la deuxième aile 5g, et la deuxième zone d'appui 5e est située sur la face externe de la deuxième aile 5g.

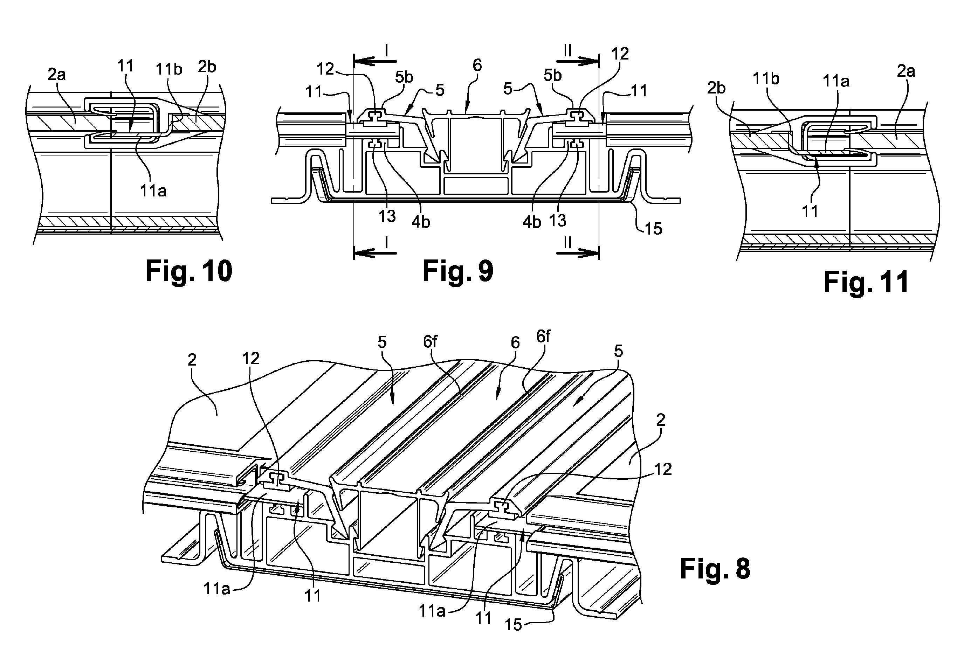

Comme cela est visible sur les figures 8 à 11, le dispositif 1 comprend plusieurs butées 11. Les butées 11 sont destinées à supporter le bord 2b inférieur de l'un des modules solaires photovoltaïques 2. Elles sont donc situées sensiblement au niveau de la zone de jonction de deux modules solaires photovoltaïques 2 consécutifs. Les figures 8 à 11 illustrent le dispositif 1 au niveau de cette zone de jonction.

Les butées 11 comprennent deux ailes, une aile 11a destinée à être fixée sur le rail 4 et une aile 11 b destinée à supporter le bord 2b inférieur de l'un des modules solaires photovoltaïques 2. Ces deux ailes 11a et 11 b sont sécantes ; dans l'exemple de réalisation représenté sur les figures 8 à 11, elles sont perpendiculaires, chaque butée 11 ayant une forme en L. L'aile 11a est par exemple soudée sur une des zones d'appui 4b du rail 4.

Lorsque le rail 4 reçoit de chaque côté un module solaire photovoltaïque 2, les butées 11 sont fixées sur chacune de ses zones d'appui 4b à une hauteur identique, de sorte que les modules solaires photovoltaïques 2 de part et d'autre du rail 4 soient alignées à la même hauteur. Le rail 4 peut comprendre une à plusieurs paires de butées 11.

Dans la forme de réalisation décrite, l'organe 6 de fixation est fixé au rail 4 par clipsage.

En particulier, l'organe 6 de fixation comprend deux languettes 6b. L'extrémité des languettes 6b présente un retour 6c. Les languettes 6b sont capables de fléchir par pression perpendiculaire au plan de la face externe 6d, au contact des moyens de fixation complémentaires du rail 4 lorsque l'organe 6 de fixation est fixé au rail 4. Les moyens de fixation complémentaires du rail 4 comprennent une zone centrale 4c s'étendant le long du rail 4, sensiblement au centre de ce dernier. Les parois latérales de la zone centrale 4c sont munies de retours 4d. Les retours 4d coopèrent avec les retours 6c de façon complémentaire pour autoriser l'insertion de l'extrémité des languettes 6b à l'intérieur de la zone centrale 4c tout en empêchant le retrait de l'organe 6 de fixation sans déformation préalable de ce dernier à l'aide d'un outil.

L'organe 6 de fixation comprend une face externe 6d et, opposée à cette dernière, une face interne 6e. Selon le mode de réalisation représenté sur les figures 1 à 11, l'organe 6 de fixation comprend, sur la face externe 6d, dans le prolongement des languettes 6b, des éléments 6f en saillie. Dans l'exemple des figures 3 et 8, ces éléments 6f en saillie correspondent à des nervures.

Comme cela est représenté par exemple sur la figure 6, chaque zone de contact 6a de l'organe 6 de fixation présente une surface sensiblement plane destinée à venir en appui contre la portion 5c de l'un des organes 5 de maintien. Cette surface forme avantageusement avec la face externe 6d un angle α compris entre 45° et 65°.

L'organe 6 de fixation peut présenter en sa partie centrale une zone de moindre épaisseur. Comme illustré à la figure 6, cette zone de moindre épaisseur peut être réalisée par un creux 6g. Ce creux 6g s'étend longitudinalement sur la longueur de l'organe 6 de fixation, en sa partie centrale. Selon le mode de réalisation représenté sur la figure 6, le creux 6g est ménagé sur la face interne 6e.

L'organe 6 de fixation peut présenter un plan de symétrie P. Le plan de symétrie P peut être parallèle à l'axe du rail 4 et normal au plan de support de ce dernier.

Comme cela est représenté sur la figure 7 ou la figure 9, la portion 5b de chaque organe 5 de maintien disposée en regard de la zone d'appui 4b correspondante du rail 4 comprend une rainure 5h. A l'intérieur de cette rainure 5h est disposé un premier élément 12 d'étanchéité.

De manière complémentaire, chaque zone d'appui 4b peut comprendre une rainure 4e à l'intérieur de laquelle est disposé un deuxième élément 13 d'étanchéité.

Le premier élément 12 d'étanchéité et le deuxième élément 13 d'étanchéité peuvent être des joints d'étanchéité.

Ainsi, l'un des bords de laminés 2c latéraux d'un module solaire photovoltaïque 2 est serré entre le premier élément 12 et le deuxième élément 13 d'étanchéité.

Comme cela est visible sur les différentes figures, les rainures 5h et 4e sont des rainures en T, de sorte que la liaison entre la rainure 5h et le premier élément 12 d'étanchéité, respectivement la liaison entre la rainure 4e et le deuxième élément 13 d'étanchéité, corresponde à une liaison glissière maintenue. Le premier élément 12 d'étanchéité et le deuxième élément 13 d'étanchéité peuvent ainsi être montés à l'intérieur respectivement des rainures 5h et 4e par coulissement ou par pressage.

Conformément à la figure 4, le rail 4 peut comporter deux goulottes 4f s'étendant chacune le long du rail 4, sous chaque organe 5 de maintien. Chaque goulotte 4f est disposée entre la zone d'appui 4b et la zone de positionnement 4a coopérant avec un même organe 5 de maintien.

Un chéneau 15 peut être prévu sous le rail 4.

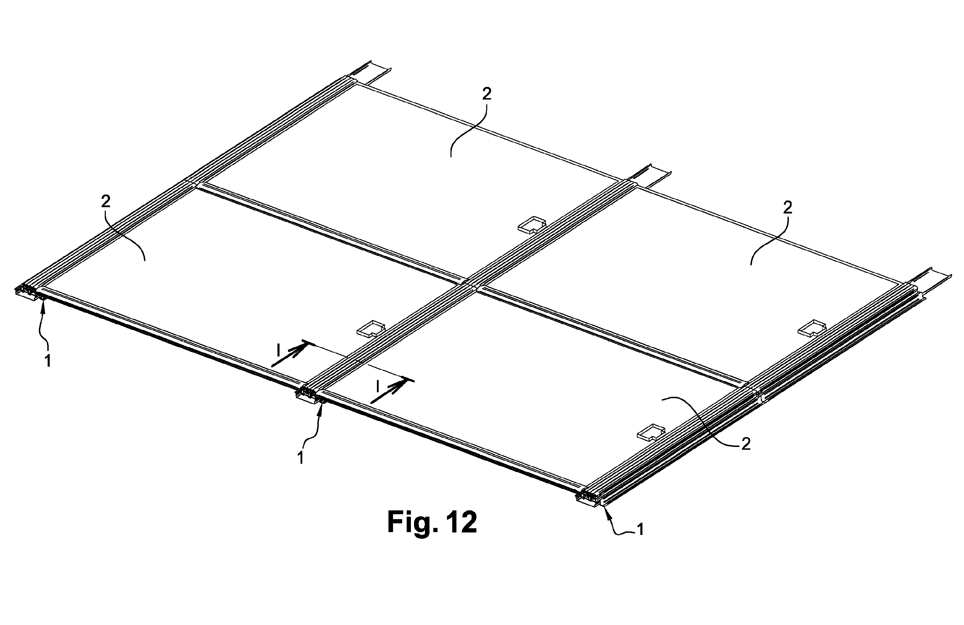

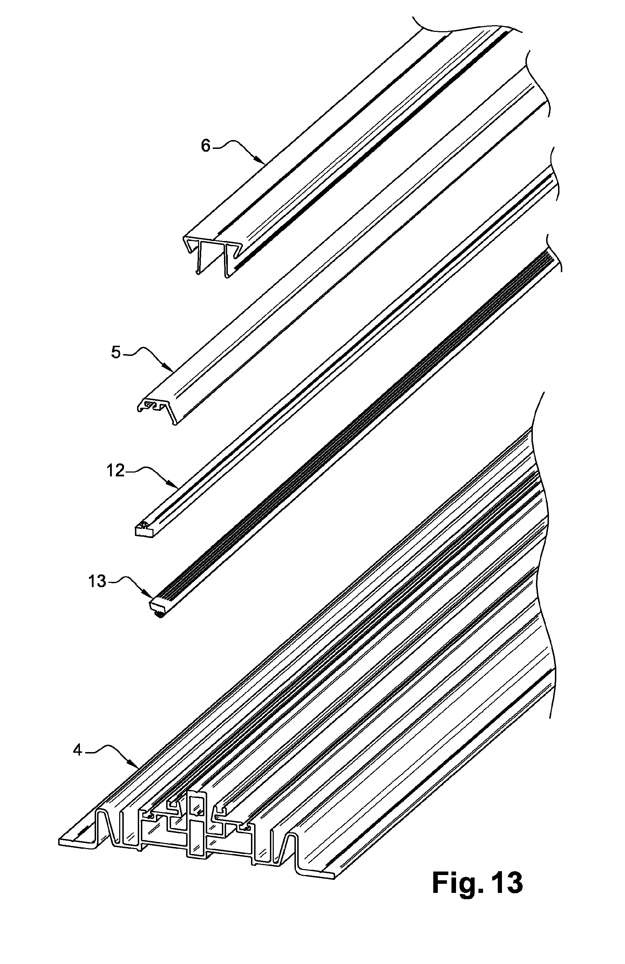

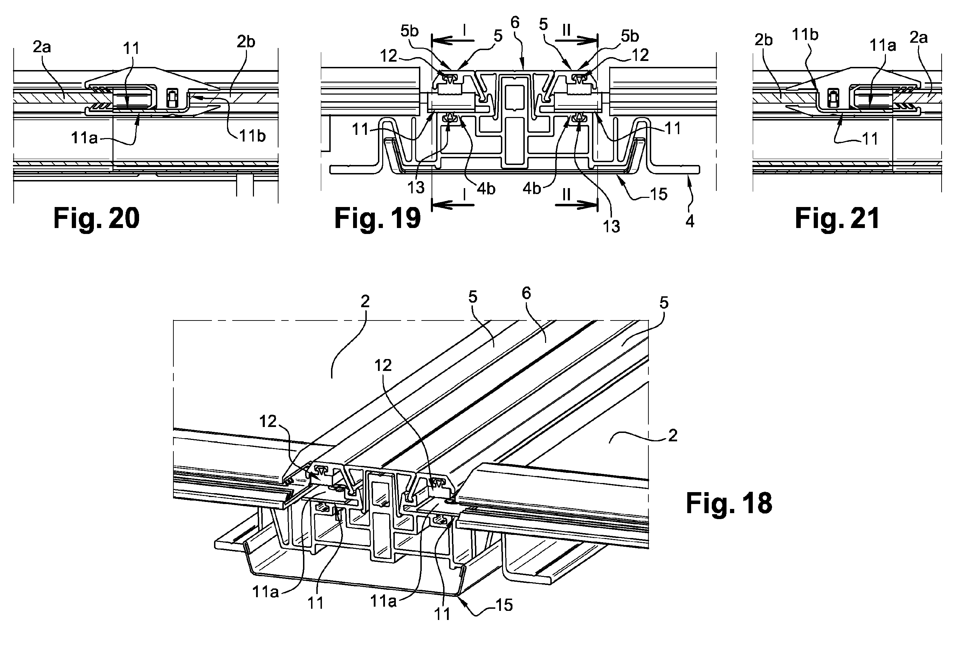

Les figures 12 à 21 illustrent un autre mode de réalisation du dispositif 1 selon l'invention.

En particulier, on notera que dans ce mode de réalisation, à la différence du mode de réalisation précédemment exposé, l'organe 6 de fixation présente une face externe 6d qui est lisse (autrement dit, la face externe 6e ne comporte pas d'éléments 6f en saillie, conformément à l'exemple de la figure 16). Le creux 6g est cette fois-ci localisé sur la face externe 6d. De plus, les languettes 6b sont inclinées par rapport à la face interne 6e. En d'autres termes, les languettes 6b ne sont pas perpendiculaires à la face interne 6e. L'organe 6 de fixation peut également comprendre à la jonction entre les languettes 6b et la face interne 6e des creux 6h favorisant la flexion.

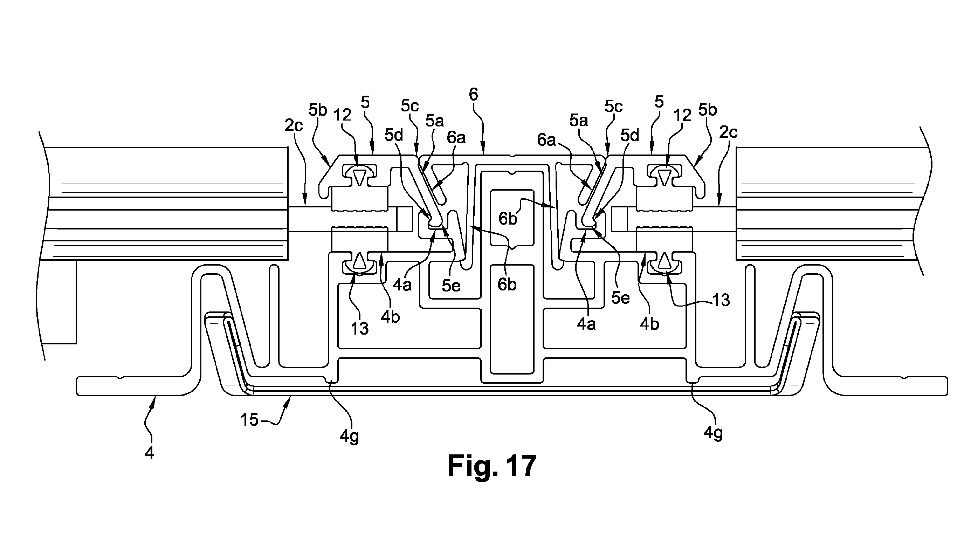

Comme cela est visible sur la figure 17, le rail 4 peut comporter des plots 4g, sur une face inférieure, afin de prévenir tout phénomène de capillarité entre le rail 4 et le chéneau 15. Cette caractéristique peut être reproduite sur le rail 4 représenté sur les figures 1 à 11.

Pour le reste, le dispositif 1 selon le mode de réalisation illustré aux figures 12 à 21 fonctionne de façon similaire à celui selon le mode de réalisation représenté sur les figures 1 à 11.

Bien entendu, l'invention n'est nullement limitée aux modes de réalisation décrits ci-dessus, ces modes de réalisation n'ayant été donnés qu'à titre d'exemples. Des modifications restent possibles, notamment du point de vue de la constitution des divers éléments ou par la substitution d'équivalents techniques, sans sortir pour autant du domaine de protection de l'invention.

Ainsi, les saillies 6f sur la face externe 6d peuvent consister en une pluralité de plots alignés.

De façon alternative, il est possible d'avoir un organe 6 de fixation avec une face externe 6d et une face interne 6e sans creux 6g et/ou creux 6h.

En outre, au lieu de deux organes 5 de maintien formant deux pièces distinctes, les organes 5 de maintien peuvent être réalisés en une seule et même pièce. Autrement dit, ils peuvent être liés entre eux de manière à former une seule pièce.

## Revendications

1. Dispositif (1) de fixation d'un module solaire photovoltaïque (2) sur un support, **caractérisé en ce qu'**il comprend un rail (4) destiné à être relié au support, un organe (5) de maintien et un organe (6) de fixation, et **en ce que**:
(i) le rail (4) présente une zone de positionnement (4a), une zone d'appui (4b) capable de supporter un bord (2c) latéral du module solaire photovoltaïque (2), et des moyens de fixation complémentaires de l'organe (6) de fixation,
(ii) l'organe (5) de maintien comprend une portion (5a) disposée à l'intérieur de la zone de positionnement (4a) et une portion (5b) disposée en regard de la zone d'appui (4b), au-dessus du bord (2c), et
(iii) l'organe (6) de fixation comprend une zone de contact (6a) en appui contre l'organe (5) de maintien, de sorte que l'organe (6) de fixation coopère de façon complémentaire à l'organe (5) de maintien afin de serrer le bord (2c) entre la zone d'appui (4b) et la portion (5b) de l'organe (5) de maintien disposée en regard de la zone d'appui (4b).

2. Dispositif (1) de fixation selon la revendication 1, **caractérisé en ce qu'**il comprend un deuxième organe (5) de maintien similaire au précédent, présentant une portion (5a) positionnée à l'intérieur d'une deuxième zone de positionnement (4a) du rail (4) et une portion (5b) disposée en regard d'une deuxième zone d'appui (4b) du rail (4), et **en ce que** l'organe (6) de fixation comprend une deuxième zone de contact (6a) en appui contre le deuxième organe (5) de maintien, de sorte que l'organe (6) de fixation coopère aussi de façon complémentaire au deuxième organe (5) de maintien afin de serrer un deuxième bord (2c) latéral d'un deuxième module solaire photovoltaïque (2) entre la deuxième zone d'appui (4b) et la portion (5b) du deuxième organe (5) de maintien disposée en regard de la deuxième zone d'appui (4b).

3. Dispositif (1) de fixation selon la revendication 2, **caractérisé en ce que** le premier et le deuxième organe (5) de maintien sont réalisés en une seule et même pièce.

4. Dispositif (1) de fixation selon l'une des revendications 1 à 3, **caractérisé en ce que** chaque organe (5) de maintien forme un levier.

5. Dispositif (1) de fixation selon la revendication 4, **caractérisé en ce que** chaque organe (5) de maintien présente une zone d'appui (5d) servant de point d'appui du levier formé, et une portion (5c) en contact avec la zone de contact (6a) correspondante de l'organe (6) de fixation, et **en ce que** la distance séparant chaque première zone d'appui (5d) et chaque portion (5c) en contact avec la zone de contact (6a) correspondante de l'organe (6) de fixation correspond sensiblement à un bras de levier.

6. Dispositif (1) de fixation selon la revendication 5, **caractérisé en ce que** chaque organe (5) de maintien comprend en outre une deuxième zone d'appui (5e), sur une surface distincte de celle comprenant la première d'appui (5d).

7. Dispositif (1) de fixation selon la revendication 5 ou 6, **caractérisé en ce que** chaque portion (5c) en contact avec la zone de contact (6a) correspondante de l'organe (6) de fixation est en saillie.

8. Dispositif (1) de fixation selon l'une des revendications 1 à 7, **caractérisé en ce que** l'organe (6) de fixation comprend une face externe (6d), chaque zone de contact (6a) de l'organe (6) de fixation présentant une surface de contact sensiblement plane formant avec un la face externe (6e) un angle (α) compris entre 45° et 65°.

9. Dispositif (1) de fixation selon l'une des revendications 1 à 8, **caractérisé en ce que** l'organe (6) de fixation est fixé sur le rail (4) par clipsage.

10. Dispositif (1) de fixation selon la revendication 9, **caractérisé en ce que** l'organe (6) de fixation comprend deux languettes (6b) capables de se déformer au contact des moyens de fixation complémentaires du rail (4), les moyens de fixation complémentaires comprenant au moins un retour (4d), et **en ce que** l'extrémité des languettes (6b) comprend au moins un retour (6c), chaque retour (6c) des languettes (6b) coopérant de manière complémentaire avec le ou l'un des retours (4d) des moyens de fixation complémentaires du rail (4), en vue de permettre l'insertion puis le maintien de l'organe (6) de fixation sur le rail (4).

11. Dispositif (1) de fixation selon l'une des revendications 1 à 10, **caractérisé en ce qu'**un premier élément (12) d'étanchéité est interposé entre le bord (2c) d'un module solaire photovoltaïque et la portion (5b) de chaque organe (5) de maintien disposée en regard de la zone d'appui (4b) correspondante du rail (4), et **en ce qu'**un deuxième élément (13) d'étanchéité est interposé entre le bord (2c) du module solaire photovoltaïque et la zone d'appui (4b) correspondante du rail (4), de sorte que le bord (2c) du module solaire photovoltaïque est serré entre le premier élément (12) d'étanchéité et le deuxième élément (13) d'étanchéité.

12. Dispositif (1) de fixation selon la revendication 11, **caractérisé en ce que** le rail (4) comprend au moins une goulotte (4f) s'étendant le long du rail (4), entre la zone d'appui (4b) et la zone de positionnement (4a) coopérant avec chaque organe (5) de maintien.
